Europäisches Patentamt

European Patent Office

Office européen des brevets

(11) Veröffentlichungsnummer: **0 212 740**
A2

# (12) EUROPÄISCHE PATENTANMELDUNG

(21) Anmeldenummer: 86201371.1

(22) Anmeldetag: 04.08.86

(51) Int. Cl.⁴: **H 05 B 41/19**

(30) Priorität: 28.08.85 DE 3530638

(43) Veröffentlichungstag der Anmeldung: 04.03.87
Patentblatt 87/10

(84) Benannte Vertragsstaaten: DE FR GB NL

(71) Anmelder: **Philips Patentverwaltung GmbH,
Billstrasse 80, D-2000 Hamburg 28 (DE)**
(84) Benannte Vertragsstaaten: **DE**

(71) Anmelder: **N.V. Philips' Gloeilampenfabrieken,
Groenewoudseweg 1, NL-5621 BA Eindhoven (NL)**
(84) Benannte Vertragsstaaten: **FR GB NL**

(72) Erfinder: **Ganser, Hans-Günther, Brockenberg 7a,
D-5190 Stolberg (DE)**
Erfinder: **Schäfer, Ralf, Dr., Büchel 34, D-5100 Aachen
(DE)**
Erfinder: **Stormberg, Hans-Peter, Dr., Weissdornweg 52,
D-5190 Stolberg (DE)**

(74) Vertreter: **Auer, Horst, Dipl.-Ing., Philips
Patentverwaltung GmbH
Billstrasse 80 Postfach 10 51 49,
D-2000 Hamburg 28 (DE)**

(54) Schaltungsanordnung zum Starten und Betrieb von Gasentladungslampen.

(57) Bei einer Schaltungsanordnung zum Starten und Betrieb einer Gasentladungslampe mit höherfrequentem Strom, bestehend aus einem an eine Eingangsgleichspannungsquelle (2) angeschlossenen elektronischen Vorschaltgerät mit einem von einer Steuereinrichtung (8) gesteuerten elektronischen Schaltelement (3), das in Reihe mit einem vom Lampenstrom beaufschlagten induktiven Bauelement (4) liegt, von dem eine Spannung abnehmbar ist, die über einen Gleichrichter (14) und einen Glättungskondensator (16) der Steuereinrichtung als Versorgungsgleichspannung zugeführt wird, ist der erste Anschluss des Glättungskondensators (16) über einen ersten ohmschen Widerstand (18) mit einem ersten Pol der Eingangsgleichspannungsquelle und sein zweiter Anschluss über die Lampe (5) mit einem zweiten Pol der Eingangsgleichspannungsquelle verbunden.

Schaltungsanordnung zum Starten und Betrieb von
Gasentladungslampen

Die Erfindung bezieht sich auf eine Schaltungsanordnung zum Starten und Betrieb einer Gasentladungslampe mit höherfrequentem Strom, versehen mit einem an eine Eingangsgleichspannungsquelle anzuschließenden elektronischen Vorschaltgerät mit einem von einer Steuereinrichtung gesteuerten elektronischen Schaltelement, das in Reihe mit einem vom Lampenstrom beaufschlagten induktiven Bauelement liegt, von dem eine Spannung abnehmbar ist, die über einen Gleichrichter und einen Glättungskondensator der Steuereinrichtung als Versorgungsgleichspannung zugeführt wird. Unter einem höherfrequenten Strom ist ein Wechselstrom mit einer Frequenz zwischen 10 und 500 kHz, vorzugsweise zwischen 20 und 150 kHz, zu verstehen.

Bei aus der DE-OS 25 46 760 und der DE-OS 31 11 561 bekannten Schaltungsanordnungen dieser Art wird die Versorgungsgleichspannung mittels einer Anzapfung bzw. Sekundärwicklung eines bereits im elektronischen Vorschaltgerät benutzten induktiven Bauelementes erzeugt. Bei dieser Art der Versorgungsgleichspannungserzeugung ist aber das höherfrequente Schalten des elektronischen Schaltelementes im allgemeinen erst dann möglich, wenn bereits eine Versorgungsgleichspannung zur Ansteuerung dieses Schaltelementes vorhanden ist. Aus diesem Grunde wird bei den bekannten Schaltungsanordnungen eine Startschaltung benutzt, welche die Steuerelektrode des elektronischen Schaltelementes von der gleichgerichteten Netzspannung her über Widerstände bzw. Dioden und Kondensatoren mit einer Versorgungsgleichspannung beaufschlagt, welche das höherfrequente Schalten des elektronischen Schaltelementes einleitet. Dies hat den Nachteil, daß zusätzliche Bauelemente benötigt werden, die ansonsten keine weitere Funktion besitzen und in denen darüber hinaus Verluste auftreten. Außerdem kann insbesondere bei Schaltungsanordnungen, die eine elektronische Steuereinrichtung zur Strombegrenzung besitzen, das Problem auftreten, daß im Augenblick des Einschaltens des elektronischen Schaltelementes über die Startschaltung die Steuereinrichtung noch nicht ausreichend mit Spannung versorgt ist. Somit ist eine sichere Strombegrenzungsfunktion der Steuereinrichtung noch nicht gegeben, so daß das Schaltelement durch Überströme zerstört werden kann.

Aus diesem Grunde ist es aus der EU-OS 00 59 053 bekannt, über eine mittels eines Thyristors aufgebaute Startschaltung direkt den Glättungskondensator der Versorgungsgleichspannung aufzuladen, wodurch das Einschalten der elektronischen Schaltelemente erst erfolgt, wenn auch die Steuereinrichtung in Tätigkeit ist. Auch hierbei werden zusätzliche Bauelemente benötigt, die sonst keine weitere Funktion besitzen.

Der Erfindung liegt daher die Aufgabe zugrunde, bei einer Schaltungsanordnung zum Starten und Betrieb von Gasentladungslampen mit einem elektronischen Vorschaltgerät eine Gleichspannungsversorgung für deren Steuereinrichtung zu schaffen, die möglichst einfach und verlustfrei aufgebaut ist und gegebenenfalls mit anderen notwendigen Funktionen des Vorschaltgerätes kombiniert werden kann. Ferner soll die Schaltungsanordnung auch bei schwer zündenden Lampen ein sicheres Anlaufen ermöglichen.

Diese Aufgabe wird bei einer Schaltungsanordnung eingangs erwähnter Art gemäß der Erfindung dadurch gelöst, daß der erste Anschluß des Glättungskondensators über einen ersten ohmschen Widerstand mit einem ersten Pol der Eingangsgleichspannungsquelle und sein zweiter Anschluß über die Lampe mit einem zweiten Pol der Eingangsgleichspannungsquelle verbunden ist.

Durch diese Schaltungsanordnung wird erreicht, daß während des Startvorgangs über den aus dem Glättungskondensator sowie dem ersten ohmschen Widerstand bestehenden Stromkreis ein zum normalen Stromfluß durch das eigentliche elektronische Vorschaltgerät zusätzlicher Strom durch die Lampe fließen kann, der das Zünden der Lampe, insbesondere das Zünden der noch heißen Lampe, erleichtert und gleichzeitig den Glättungskondensator auf das für eine Ansteuerung des Schaltelements notwendige Gleichspannungsniveau auflädt.

Vorzugsweise ist parallel zum Glättungskondensator ein spannungsstabilisierendes Element, insbesondere eine Zenerdiode, geschaltet.

Der mit dem Glättungskondensator in Reihe liegende ohmsche Widerstand begrenzt den zusätzlichen Stromfluß durch die Lampe. Dabei kann es vorteilhaft sein, daß in Reihe mit dem ersten ohmschen Widerstand und dem Glättungskondensator ein steuerbarer Halbleiterschalter geschaltet ist. Der steuerbare Halbleiterschalter dient dazu, den Strom über den ersten ohmschen Widerstand nach dem Starten der Lampe zu unterbrechen. Hierdurch werden Verluste in dem ersten ohmschen Widerstand vermieden.

In einem ersten Ausführungsbeispiel ist der steuerbare Halbleiterschalter ein erster Schalttransistor. Das An-und Abschalten dieses Schalttransistors kann auf einfache Weise dadurch erfolgen, daß seine Kollektor-Basis-Strecke durch einen zweiten ohmschen Widerstand und seine
Emitter-Basis-Strecke durch einen zweiten Schalttransistor
überbrückt ist, dessen Basis mit dem gleichrichterseitigen
Ende eines zwischen Gleichrichter und Glättungskondensator
geschalteten Strombegrenzungswiderstandes verbunden ist.
Hierdurch wird erreicht, daß beim Stromfluß vom induktiven
Bauelement über den Gleichrichter und den Strombegrenzungswiderstand zum Glättungskondensator der zweite
Schalttransistor durch den Spannungsabfall am Strombegrenzungswiderstand leitfähig wird, wodurch wiederum der
erste Schalttransistor hochohmig wird und damit den
zusätzlichen Stromfluß unterbricht.

Um eine definierte Abschaltung des zusätzlichen Stromflusses erst bei für die Steuereinrichtung ausreichend
hoher Versorgungsgleichspannung zu gewährleisten, ist es
zweckmäßig, zwischen den Strombegrenzungswiderstand und
die Basis des zweiten Schalttransistors ein spannungsabhängiges Schwellenelement, z.B. eine Zenerdiode, einen
Diac oder einen Sidac, zu schalten, wodurch der zweite
Schalttransistor erst leitfähig wird, wenn der Spannungsabfall die Schwellenspannung des Schwellenelementes überschreitet.

Weiterhin kann es für das Anlaufverhalten der Lampe von
Vorteil sein, wenn der zusätzliche Stromfluß auch noch
nach dem Startvorgang für einige Zeit bestehen bleibt.
Dies kann dadurch erreicht werden, daß zwischen den Strombegrenzungswiderstand und die Basis des zweiten Schalttransistors eine RC-Kombination geschaltet ist, so daß
seine Basisspannung nur verzögert ansteigen kann.

Bei schwer zu zündenden Lampen kann es vorkommen, daß ein
erheblich hoher zusätzlicher Stromfluß zum sicheren
Anlaufen notwendig ist. In diesem Fall muß der benötigte erste Schalttransistor relativ groß und teuer sein. Deshalb ist es vorteilhaft, anstelle des ersten Schalttransistors einen billigeren und kleineren Thyristor oder Triac als steuerbaren Halbleiterschalter zur Unterbrechung des zusätzlichen Stromflusses zu verwenden. Das An- und Abschalten des Thyristors (Triacs) kann dabei auf einfache Weise durch eine Schaltungsanordnung erfolgen, bei der die Reihenschaltung aus Thyristor bzw. Triac und Glättungskondensator durch einen Spannungsteiler mit zwei Teilwiderständen überbrückt ist, dessen Verbindungspunkt zwischen den beiden Teilwiderständen über ein spannungsabhängiges Schwellenelement mit der Steuerelektrode des Thyristors bzw. Triacs verbunden ist. Das spannungsabhängige Schwellenelement kann in diesem Fall wiederum eine Zenerdiode, ein Diac oder ein Sidac sein. Diese Schaltungsanordnung hat den Vorteil, daß eine Zündung des Thyristors bzw. Triacs bereits dann erfolgt, wenn der Glättungskondensator noch nicht aufgeladen ist, und die Zündung des Thyristors bzw. Triacs selbsttätig unterbrochen wird, wenn die Spannung am Glättungskondensator einen vorgegebenen Wert erreicht.

Hierbei läßt sich eine verbesserte Zündung des Thyristors bzw. Triacs und dadurch geringere Übergangsverluste erreichen, wenn zwischen das spannungsabhängige Schwellenelement und dem vom Thyristor bzw. Triac abgewandten Anschluß des Glättungskondensators ein weiterer Kondensator geschaltet ist.

Weiterhin kann es günstig sein, zwischen Kathode und Steuerelektrode des Thyristors bzw. Triacs einen Entstörkondensator zu schalten. Hierdurch werden Hochfrequenzstörungen vermindert und somit ein unbeabsichtigtes Zünden vermieden.

Bei schwierig zu zündenden Gasentladungslampen kann parallel zur Lampe eine Zündschaltung mit Bauelementen vorgesehen sein, die einen Zündimpuls auf die Lampe bzw. deren äußere Zündelektrode geben. Gleichzeitig gestatten diese Bauelemente einen Stromdurchgang bei noch nicht ionisierter Lampe zur Aufladung des Glättungskondensators.

Bei Benutzung von Thyristoren (Triacs) kann ein Problem darin bestehen, daß eine Synchronisation zwischen dem Zünden des Thyristors (Triacs) und der Ionisation der Lampe durch eine Lampenzündschaltung nicht zu bestehen braucht. Deshalb kann es passieren, daß bei der Ionisation der Lampe der Thyristor bereits wieder nichtleitend geworden ist, da durch die noch nicht ionisierte Lampe kein ausreichender Stromfluß möglich war. Dies kann nach einer Weiterbildung der Erfindung dadurch vermieden werden, daß mittels eines dritten ohmschen Widerstands ein weiterer Strompfad parallel zur Lampe geschaffen wird, der es erlaubt, daß auch bei unionisierter Lampe ein Strom durch den Thyristor (Triac) fließen kann, der oberhalb seines Haltestromes liegt. Hierdurch bleibt der Thyristor (Triac) leitfähig, bis die Lampe ionisiert ist; es kann dann der eigentliche Zusatzstrom über Thyristor (Triac) und Lampe fließen und somit eine sichere Lampenzündung bewirken.

Einige Ausführungsbeispiele nach der Erfindung werden nunmehr anhand der Zeichnung näher beschrieben. Es zeigen:

Fig. 1 eine Schaltungsanordnung zum Starten und Betrieb einer Gasentladungslampe mit einem über eine Steuereinrichtung geregelten Durchflußwandler,

Fig. 2 eine abgewandelte Schaltungsanordnung dieser Art.

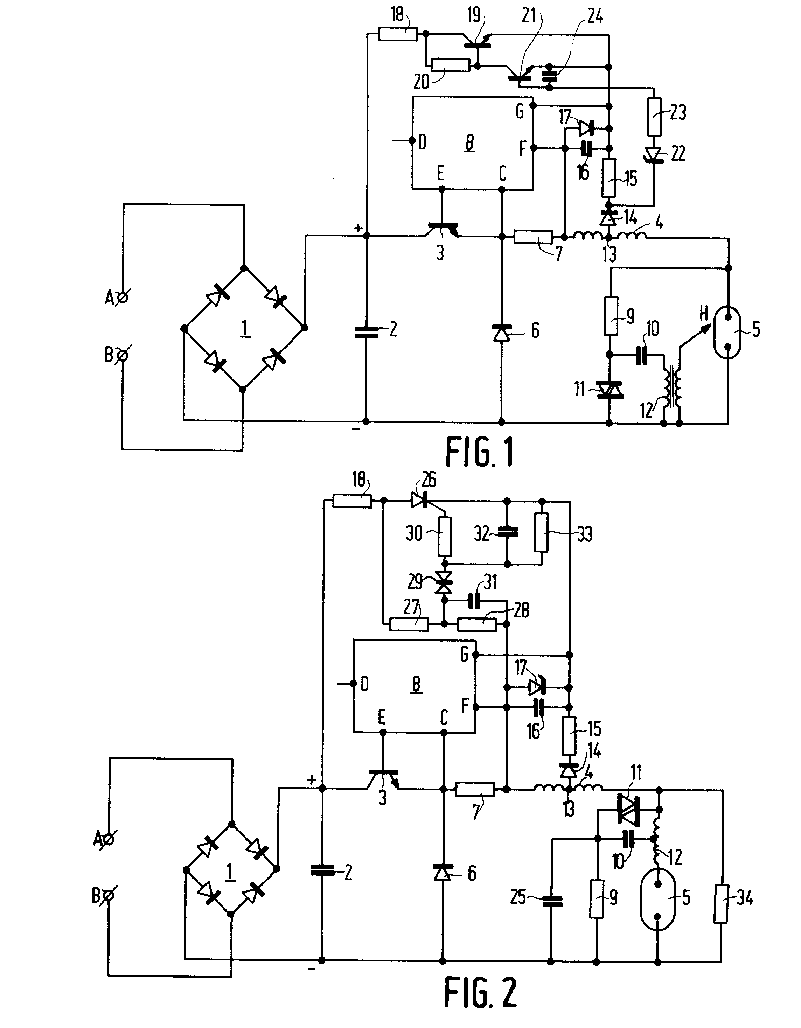

In Fig. 1 sind mit A und B Eingangsklemmen zum Anschließen an ein Wechselspannungsnetz von z.B. 220 V, 50 Hz bezeichnet. An diese Eingangsklemmen A und B ist, gegebenenfalls über ein nicht dargestelltes Hochfrequenzfilter, ein Vollweggleichrichter 1 mit vier Dioden angeschlossen, dessen Ausgang ein Ladekondensator 2 parallelgeschaltet ist. Parallel zu diesem Ladekondensator 2 ist an den Ausgang des Vollweggleichrichters 1 ein aus einem elektronischen Schaltelement 3, z.B. einem Hauptschalttransistor, einer Drosselspule 4, einer Gasentladungslampe 5 und einer Freilaufdiode 6 bestehender Durchflußwandler angeschlossen. Der Ladekondensator 2 bildet eine Eingangsspannungsquelle und dient u.a. zur Erleichterung der Wiederzündung der Lampe 5. Die Drosselspule 4 bildet dabei ein im angeschlossenen Zustand der Lampe vom Lampenstrom beaufschlagtes induktives Bauelement. In den Lampenkreis ist ferner ein als Stromsensor dienender Meßwiderstand 7 eingefügt, an dem eine dem momentanen Lampenstrom-Istwert proportionale Istwertspannung abgegriffen wird, die auf den Eingang C einer Steuereinrichtung 8 gegeben wird. Der Lampenstrom wird durch die Steuereinrichtung 8 in an sich bekannter Weise einem am Eingang D der Steuereinrichtung 8 anzulegenden Sollwert-Signal nachgeführt.

Hierbei soll der dem Wechselspannungsnetz entnommene Strom möglichst sinusförmig verlaufen. Durch das am Ausgang E der Steuereinrichtung 8 entstehende höherfrequente Signal wird das elektronische Schaltelement 3 leitend bzw. nichtleitend geschaltet. Die Klemme F der Schalteinrichtung 8 ist mit Masse verbunden. Über die Klemme G wird der Steuereinrichtung 8 eine Versorgungsgleichspannung zugeführt.

Der Lampe 5 ist eine Zündschaltung parallelgeschaltet, die aus einem Ladewiderstand 9, einem Impulskondensator 10, einem Sidac-Schaltelement 11 sowie einem Zündtransformator 12 besteht. Über den Ladewiderstand 9 wird der Impulskondensator 10 auf die über der Lampe 5 liegende Spannung aufgeladen. Sobald diese Spannung am Impulskondensator 10 die Schwellenspannung des Sidac-Schaltelementes 11 erreicht, wird dieses Schaltelement leitend, so daß sich der Impulskondensator 10 über die Primärwicklung des Zündtransformators 12 entlädt und dabei in dessen Sekundärwicklung einen Spannungsimpuls von einigen kV hervorruft, der auf eine Startelektrode H der Lampe 5 gegeben wird. Nach der Entladung des Impulskondensators 10 wird das Sidac-Schaltelement 11 wieder hochohmig.

Die Versorgungsgleichspannung (z.B. +10 V) für die Steuereinrichtung 8 sowie den Hauptschalttransistor 3 wird aus einer Anzapfung 13 der Drosselspule 4 erzeugt. Die von dieser Drosselspule 4 abgenommene höherfrequente Spannung wird dann mittels einer Gleichrichterdiode 14 gleichgerichtet und über einen Strombegrenzungswiderstand 15 auf einen Glättungskondensator 16 gegeben, dem zur Spannungsbegrenzung eine Zenerdiode 17 als spannungsstabilisierendes Element parallelgeschaltet ist. Die Ladespannung des Glättungskondensators 16 wird der Steuereinrichtung 8 über deren Klemmen F und G als Versorgungsgleichspannung zugeführt. Dabei entsteht die hochfrequente Spannung an der Anzapfung 13 jedoch nur, wenn der Hauptschalttransistor 3 bereits schaltet, d.h. wenn bereits eine Versorgungsgleichspannung vorhanden ist. Um diese beim Einschalten der Anordnung zu erhalten, ist deshalb eine besondere Startschaltung notwendig. Gemäß der Erfindung wird hierzu der Glättungskondensator 16 über einen ersten ohmschen Widerstand 18 und einen ersten Schalttransistor 19 mit dem ersten Pol der Eingangsgleichspannungsquelle 2 verbunden und über die Drosselspule 4 sowie die von der Zündschaltung ionisierte Lampe 5 bzw.

über den Widerstand 9, den Kondensator 10 und den Zündtransformator 12 mit dem zweiten Pol der Eingangsgleichspannungsquelle 2 verbunden, und somit von der gleichgerichteten Netzspannung aufgeladen. Durch den dabei durch die Lampe fließenden zusätzlichen Ladestrom wird ein sicheres Zünden der Lampe erreicht. Der den steuerbaren Halbleiterschalter bildende erste Schalttransistor 19 wird durch einen zweiten ohmschen Widerstand 20 in der Kollektor-Basis-Strecke in den leitfähigen Zustand versetzt. Sobald am Glättungskondensator 16 eine ausreichende Spannung ansteht, beginnt die Steuereinrichtung 8 und damit der Hauptschalttransistor 3 zu arbeiten, wodurch an der Anzapfung 13 der Drosselspule 4 die erwähnte Hochfrequenzspannung entsteht und damit der Glättungskondensator 16 sich normal auflädt. Dabei entsteht an dem Strombegrenzungswiderstand 15 ein Spannungsabfall, mit dem die Basis eines zweiten Schalttransistors 21, der die Emitter-Basis-Strecke des ersten Schalttransistors 19 überbrückt, beaufschlagt wird. Hierdurch wird der zweite Schalttransistor 21 leitfähig und damit wiederum der erste Schalttransistor 19 hochohmig geschaltet, so daß der nun nicht mehr notwendige zusätzliche Ladestromkreis für den Glättungskondensator 16 unterbrochen wird.

In Fig. 1 sind zwischen den Strombegrenzungswiderstand 15 und die Basis des Schalttransistors 21 ein spannungsabhängiges Schwellenelement in Form einer Zenerdiode 22 sowie eine aus einem Widerstand 23 und einem Kondensator 24 bestehende RC-Kombination geschaltet. Die Zenerdiode 22 bewirkt, daß eine Ansteuerung der Basis des zweiten Schalttransistors 21 erst erfolgt, wenn der Spannungsabfall am Strombegrenzungswiderstand 15 oberhalb der Zenerspannung der Zenerdiode 22 liegt, wodurch sichergestellt wird, daß von der Drosselspule 4 ein ausreichender Strom zum Glättungskondensator 16 fließen kann. Durch die RC-Kombination 23, 24 wird weiterhin erreicht, daß das Unterbrechen des zusätzlichen Stromkreises mit der Zeitkonstanten $R_{23} \times C_{24}$ verzögert erfolgt, da der Spannungsanstieg an der Basis des zweiten Schalttransistors 21 entsprechend verzögert verläuft. Hierdurch wird z.B. während der ersten auf die Ionisation der Lampe 5 folgenden Netzhalbwellen der zusätzliche Stromfluß durch die Lampe 5 aufrechterhalten, was zu einer Verbesserung deren Zünd- und Anlaufverhaltens führt.

Ein Nachteil der bisher beschriebenen Startschaltung mit Transistoren als steuerbare Halbleiterschalter besteht darin, daß Transistoren, die relativ große zusätzliche Ströme zulassen (z.B. 1 A), teuer sind und zu ihrer Ansteuerung relativ hohe Leistungen benötigen. Andererseits sind aber z.B. für die Wiederzündung von noch heißen Hochdrucklampen derartig große Ströme notwendig. Aus diesem Grunde zeigt Fig. 2 eine Schaltungsanordnung, in der billige und verlustarm anzusteuernde Thyristoren bzw. Triacs benutzt werden, die dennoch hohe Ströme zulassen. Bei dem elektronischen Vorschaltgerät handelt es sich wiederum um die aus Fig. 1 bekannte Durchflußwandlungschaltung, wobei zur Zündung der Lampe 5 in diesem Fall ein aus einem Zündtransformator 12, einem Ladewiderstand 9, einem Sidac-Schaltelement 11 sowie einem Stoßkondensator 10 und einem Hochfrequenz-Rückschlußkondensator 25 bestehenderÜberlagerungszünder benutzt wird (vgl. DE-OS 31 08 547). Die Versorgung des Glättungskondensators 16 aus der Drosselspule 4 erfolgt ebenso wie bei der Schaltungsanordnung nach Fig. 1.

Zum Starten der Lampe 5 wird der Glättungskondensator 16 über den ersten ohmschen Widerstand 18, einen Thyristor 26 (oder Triac) sowie die Drosselspule 4, den Zündtransformator 12 und die von der Zündschaltung ionisierte Lampe 5 aufgeladen. Die Zündung des Thyristors 26 erfolgt dabei mittels eines Spannungsteilers aus zwei Teilwiderständen 27, 28 sowie eines Diacs 29 als spannungsabhängiges Schwellenelement, der durchschlägt und über einen Begrenzungswiderstand 30 die Zündung des Thyristors 26 einleitet, sobald zwischen dessen Kathode und Steuerelektrode eine Spannung oberhalb der Durchschlagspannung des Diacs 29 von etwa 30 V ansteht. Die Spannungsteilerwiderstände 27, 28 werden dabei so ausgelegt, daß dies immer dann der Fall ist, wenn der Glättungskondensator 16 noch ungeladen ist. Bei geladenem Glättungskondensator 16 baut dieser jedoch eine Gegenspannung von z.B. etwa 10 V auf, welche die Spannung zwischen Kathode und Steuerelektrode des Thyristors 26 so weit verringert, daß der Diac 29 nicht mehr durchschlägt und somit den Thyristor 26 nicht mehr zündet. Um eine sichere Zündung des Thyristors 26 zu erreichen, ist es vorteilhaft, parallel zum Teilwiderstand 28 einen weiteren Kondensator 31 zu schalten. Weiterhin hat es sich zur Unterdrückung von Störungen als vorteilhaft erwiesen, Steuerelektrode und Kathode des Thyristors 26 mit einem Entstörkondensator 32 zu überbrücken, dem ein Widerstand 33 parallel liegt.

Ein Problem der bisher beschriebenen Schaltungsanordnung kann darin bestehen, daß keine Synchronisation zwischen der Zündung des Thyristors 26 und der Ionisation der Lampe 5 durch die Zündschaltung mit Bauelementen 9 bis 12 und 25 besteht. So kann es vorkommen, daß der Thyristor 26 zündet, bevor die Lampe 5 ionisiert ist. Da in diesem Fall kein ausreichender Strom durch den Thyristor 26 fließt, geht er wieder in den nichtleitenden Zustand über, so daß bei anschließender Ionisation der Lampe 5 kein Strom fließen kann. Um dies zu vermeiden, muß man einen weiteren Strompfad in Form eines dritten ohmschen Widerstandes 34 parallel zur Lampe 5 schaffen, der einen Stromfluß oberhalb des Haltestromes des Thyristors 26 von z.B. einigen mA erlaubt.

Mit den dargestellten und beschriebenen Schaltungsanordnungen ist ein sicheres Zünden von z.B. Metallhalogenid- und Natriumhochdrucklampen möglich, wobei insbesondere die Schaltungsanordnung nach Fig. 2 auch zur Wiederzündung von noch heißen Lampen geeignet ist.

Bei einem Ausführungsbeispiel zum Betrieb einer 45W-Metallhalogenidlampe mit einer Lampenbrennspannung von etwa 100 V wiesen die wichtigsten Bauelemente der Schaltung nach Fig. 1 folgende Werte auf:

| | |
|---|---|
| Transistor  3 | : IRF730 von International Rectifier |
| Transistor 19 | : 2N6499 von Valvo |
| Transistor 21 | : BC107  von Valvo |
| Freilaufdiode 6 | : DSR 5400 von TRW |
| Sidac-Schaltelement 11 | : K1V26 von Shindengen |
| Diode 14 | : BAV21 von Valvo |
| Zenerdiode 17 | : BZV85/C10 von Valvo |
| Zenerdiode 22 | : BZX79/C3V6 von Valvo |
| Kondensator 10 | : 47 nF/400 V |
| Kondensator 16 | : 22 µF/25 V |
| Kondensator 24 | : 22 µF/25 V |
| Kondensator  2 | :  1 µF/400 V |
| Widerstand  9 | : 100 kOhm |
| Widerstand 15 | :   1 kOhm |
| Widerstand 18 | :   2.2 kOhm |
| Widerstand 20 | : 68 kOhm |
| Widerstand 23 | :   3.9 kOhm |
| Widerstand  7 | :   1 kOhm |
| Drosselspule 4 | :   1 mH |

Bei einem Ausführungsbeispiel zum Betrieb einer 40W-Natriumhochdrucklampe mit einer Lampenbrennspannung von etwa 50 V wiesen die wichtigsten Bauelemente der Schaltung folgende Werte auf:

| | |
|---|---|
| Thyristor 26 | : BT149 oder BT151 von Valvo |
| Diac 29 | : BR100 von Valvo |
| Kondensator 31 | : 22 nF/100 V |
| Kondensator 32 | : 22 nF/100 V |
| Kondensator 25 | : 47 nF/400 V |
| Kondensator 2 | : 1.5 $\mu$F/400 V |
| | |
| Widerstand 18 | : 290 Ohm |
| Widerstand 27 | : 680 kOhm |
| Widerstand 28 | : 120 kOhm |
| Widerstand 34 | : 25 kOhm |
| Widerstand 30 | : 18 Ohm |
| Widerstand 33 | : 470 Ohm |

Abschließend sei noch bemerkt, daß bei der Schaltungsanordnung nach der Erfindung das elektronische Vorschaltgerät nicht nur ein Durchflußwandler zu sein braucht, sondern auch als Sperrwandler, Brücken- oder Halbbrückenschaltung oder Resonanzwandler ausgebildet sein kann. Ferner kann anstelle der Drosselanzapfung 13 auch die Gesamtdrossel 4 oder aber eine auf der Drossel angebrachte Sekundärwicklung benutzt werden. Anstelle der Gleichrichterdiode 14 kann dann auch ein Brückengleichrichter verwendet werden.

PATENTANSPRÜCHE

1.      Schaltungsanordnung zum Starten und Betrieb einer Gasentladungslampe mit höherfrequentem Strom, versehen mit einem an eine Eingangsgleichspannungsquelle anzuschließenden elektronischen Vorschaltgerät mit einem von einer Steuereinrichtung gesteuerten elektronischen Schaltelement, das in Reihe mit einem vom Lampenstrom beaufschlagten induktiven Bauelement liegt, von dem eine Spannung abnehmbar ist, die über einen Gleichrichter und einen Glättungskondensator der Steuereinrichtung als Versorungsgleichspannung zugeführt wird, dadurch gekennzeichnet, daß der erste Anschluß des Glättungskondensators (16) über einen ersten ohmschen Widerstand (18) mit einem ersten Pol der Eingangsgleichspannungsquelle (2) und sein zweiter Anschluß über die Lampe (5) mit einem zweiten Pol der Eingangsgleichspannungsquelle verbunden ist.

2.      Schaltungsanordnung nach Anspruch 1, dadurch gekennzeichnet, daß parallel zum Glättungskondensator (16) ein spannungsstabilisierendes Element (17), insbesondere eine Zenerdiode, geschaltet ist.

3.      Schaltungsanordnung nach Anspruch 1 oder 2, dadurch gekennzeichnet, daß in Reihe mit dem ersten ohmschen Widerstand (18) und dem Glättungskondensator (16) ein steuerbarer Halbleiterschalter (19; 26) geschaltet ist, der den Strom über den ersten ohmschen Widerstand nach dem Starten der Lampe (5) unterbricht.

4.      Schaltungsanordnung nach Anspruch 3,
dadurch gekennzeichnet, daß der steuerbare Halbleiterschalter ein erster Schalttransistor (19) ist, dessen
Kollektor-Basis-Strecke durch einen zweiten ohmschen
Widerstand (20) und dessen Emitter-Basis-Strecke durch
einen zweiten Schalttransistor (21) überbrückt ist, dessen
Basis mit dem gleichrichterseitigen Ende eines zwischen
Gleichrichter (14) und Glättungskondensator (16)
geschalteten Strombegrenzungswiderstandes (15) verbunden
ist.

5.      Schaltungsanordnung nach Anspruch 4,
dadurch gekennzeichnet, daß zwischen den Strombegrenzungswiderstand (15) und die Basis des zweiten Schalttransistors (21) ein spannungsabhängiges Schwellenelement (22)
geschaltet ist.

6.      Schaltungsanordnung nach Anspruch 4 oder 5,
dadurch gekennzeichnet, daß zwischen den Strombegrenzungswiderstand (15) und die Basis des zweiten Schalttransistors (21) eine RC-Kombination (23, 24) geschaltet ist.

7.      Schaltungsanordnung nach Anspruch 3,
dadurch gekennzeichnet, daß der steuerbare Halbleiterschalter ein Thyristor (26) bzw. ein Triac ist und daß die
Reihenschaltung aus Thyristor bzw. Triac und
Glättungskondensator (16) durch einen Spannungsteiler mit
zwei Teilwiderständen (27, 28) überbrückt ist, dessen
Verbindungspunkt zwischen den beiden Teilwiderständen über
ein spannungsabhängiges Schwellenelement (29) mit der
Steuerelektrode des Thyristors bzw. Triacs verbunden ist.

8.	Schaltungsanordnung nach Anspruch 7,
_dadurch gekennzeichnet,_ daß zwischen das spannungsabhängige Schwellenelement (29) und dem vom Thyristor (26) bzw. Triac abgewandten Anschluß des Glättungskondensators (16) ein weiterer Kondensator (31) geschaltet ist.

9.	Schaltungsanordnung nach Anspruch 7 oder 8,
_dadurch gekennzeichnet,_ daß zwischen Kathode und Steuerelektrode des Thyristors (26) bzw. Triacs ein Entstörkondensator (32) geschaltet ist.

10.	Schaltungsanordnung nach einem der vorherigen Ansprüche,
_dadurch gekennzeichnet,_ daß parallel zur Lampe (5) eine Zündschaltung mit Bauelementen (9 bis 12; 25) vorgesehen ist, die einen Stromdurchgang bei noch nicht ionisierter Lampe gestatten.

11.	Schaltungsanordnung nach einem der Ansprüche 7 bis 10,
_dadurch gekennzeichnet,_ daß der Lampe (5) ein dritter ohmscher Widerstand (34) parallelgeschaltet ist.

0 212 740
1/1

FIG.1

FIG.2